# EUROPEAN PATENT SPECIFICATION

(11) **EP 4 527 504 B1**
(45) Date of publication and mention of the grant of the patent: **24.06.2026**
(21) Application number: 24184868.8
(22) Date of filing: 27.06.2024
(51) Int. Cl.: B02C 19/06

(54) **JET MILL SYSTEM WITH IMPROVED PULVERIZATION EFFICIENCY**
STRAHLMÜHLENSYSTEM MIT VERBESSERTER PULVERISIERUNGSEFFIZIENZ
SYSTÈME DE BROYEUR À JET AVEC EFFICACITÉ DE PULVÉRISATION AMÉLIORÉE

(30) Priority: 25.09.2023 KR 20230128499
(43) Date of publication of application: 26.03.2025
(73) Proprietor: ECOPRO BM CO., LTD., Cheongju-si, Chungcheongbuk-do 28117 (KR)
(72) Inventor: SEOL, Jaechang, Cheongju-si, 28117 (KR); KWON, Woosin, Cheongju-si, 28117 (KR); JUNG, Hyunsu, Cheongju-si, 28117 (KR); YANG, A Reum, Cheongju-si, 28117 (KR)
(74) Representative: Murgitroyd & Company

(56) References cited:
- EP-B1- 2 922 527
- CN-A- 112 619 868
- CN-A- 114 588 986
- CN-B- 108 452 917

## Description

### TECHNICAL FIELD

The present invention relates to a jet mill system with improved grinding efficiency, and more specifically, to a jet mill system that can control a temperature of compressed gas to 10°C or lower when pulverizing a sulfide-based solid electrolyte to facilitate particle size control and prevent the sulfide-based solid electrolyte from sticking to a milling main body, thereby increasing pulverization efficiency.

### BACKGROUND

Jet mill systems are known from CN 114 588 986 A, CN 108 452 917 B, EP 2 922 527 B1 and CN 112 619 868 A.

Recently, secondary batteries have become common in electronic devices such as smartphones.

A secondary battery uses lithium as a cathode, is charged by lithium ions moving from the cathode to an anode, and is discharged while lithium moves from the anode to the cathode to generate power.

These lithium secondary batteries have the advantages of high energy density and long lifespan, and are generally used in various types of electronic devices, and recently, demand has been increasing due to rapid growth of an electric vehicle market.

However, since these lithium secondary batteries use organic solvents as electrolytes for ion movement, accidents may occur due to electrolyte leakage or volatilization, which presents safety issues.

The solid electrolytes that are being developed recently are a technology that aims to replace existing liquid electrolytes by using solid sulfide compounds, and since only lithium ions move inside the electrolyte, there are no side reactions and they have the advantages of excellent safety and durability.

Among the solid electrolytes used in lithium secondary batteries, the compound represented by Li₇-XPS₆-xClx has a cubic argyrodite crystal structure and is attracting attention as a mass-produced sulfide-based solid electrolyte due to high ionic conductivity and electrochemical stability over a wide temperature range.

These solid electrolytes are manufactured into particles of a certain size through a milling process after their synthesis is complete.

A milling process for existing solid electrolytes has generally used a ball mill, but in the case of this ball mill, not only does it require several tens of hours of processing time to manufacture particles of less than 10 µm required for solid electrolyte particles, but it also has problems such as the formation of carbon compounds due to solvent reaction and the resulting decrease in electrical conductivity.

Accordingly, recently, a method of dry-pulverizing particles using a jet mill has been mainly used to control the particle size of solid electrolytes.

This type of jet mill is a device that sprays compressed air through a nozzle to make the pulverized raw materials collide with each other and separates the raw materials by particle size through a classifier at the top of a chamber where the raw materials collide, and can pulverize the sulfide-based solid electrolyte (LPSCl).

However, in the case of the sulfide-based solid electrolytes, particle size control is not easy when pulverized at a temperature above room temperature due to ductile characteristics thereof, and there is a problem that the process efficiency is reduced due to adhesion inside the milling main body.

In addition, when carbonic acid is included in the compressed air supplied to the jet mill, the carbonic acid acts as an impurity and lowers the purity or generates secondary or tertiary byproducts, which may be a factor that impedes the performance of the solid electrolyte.

### SUMMARY

The present invention as defined by claim 1 has been made to solve the various problems of the prior art as described above, and a purpose of the present invention is to provide a jet mill system that can control a temperature of compressed gas to 10°C or lower when pulverizing a sulfide-based solid electrolyte to facilitate particle size control and prevent the sulfide-based solid electrolyte from sticking to a milling main body, thereby increasing pulverization efficiency.

In order to achieve the above-described objects, there is provided a jet mill system with improved pulverization efficiency including: a compressor configured to compress gas introduced from the outside; a dehumidifier configured to remove moisture in the compressed gas from the compressor; a filter configured to filter foreign substances in the gas from which moisture has been removed from the dehumidifier; and a cooler configured to cool the gas filtered by the filter and supply the cooled gas into a milling main body of the jet mill.

In this case, the gas may be any one of pure nitrogen, pure argon, and air.

The dehumidifier dehumidifies to a dew point of -90°C.

The jet mill system with improved pulverization efficiency may further include: a pre-treatment filter configured to filter the foreign substances in the compressed and dehumidified gas; a carbonation purifier configured to purify carbonic acid in the gas from which foreign substances are filtered by the pre-treatment filter; and a post-treatment filter configured to filter residual foreign substances in the gas from which carbonic acid is purified by the carbonation purifier, in which the pre-treatment filter, the carbonation purifier, and the post-treatment filter are sequentially arranged between the dehumidifier and the cooler.

A temperature of the gas cooled by the cooler and supplied into the milling main body of the jet mill is controlled to -5°C to 10°C.

A plurality of coolers may be provided and installed in series.

Materials of a classifier installed on an upper portion of the milling main body of the jet mill to separate particles by size and a mill base in a lower portion of the milling main body are Steel Use Stainless (SUS) series or ceramic.

Specific details of other embodiments are included in the "DETAILED DESCRIPTION" and the attached "DRAWINGS".

The advantages and/or features of the present disclosure and the methods for achieving them will become clear with reference to the various embodiments described in detail below together with the attached drawings.

However, the present disclosure is not limited to the configuration of each embodiment disclosed below and may also be implemented in various different forms, and it should be noted that each embodiment disclosed in the present specification is provided only to ensure that the disclosure of the present disclosure is complete and to fully inform a person having ordinary skill in the art to which the present disclosure belongs of the scope of the present disclosure, and the present disclosure is defined only by the scope of each claim of the claims.

### ADVANTAGEOUS EFFECTS

According to the means for solving the above-described problem, the present disclosure has the following effects.

The present disclosure has the effect of facilitating particle size control of a sulfide-based solid electrolyte and preventing the sulfide-based solid electrolyte from sticking to the milling main body by adding a cooler to cool the compressed gas whose temperature has increased due to processes such as compression and dehumidification, thereby controlling the compressed gas to below 10°C.

In addition, the present disclosure has the effect of preventing carbonic acid from acting as an impurity and lowering the purity or from generating secondary or tertiary byproducts, thereby hindering the performance of the solid electrolyte, by additionally installing a carbonation purifier.

### BRIEF DESCRIPTION OF THE DRAWINGS

Fig. 1 is a view illustrating a schematic configuration of a jet mill system with improved pulverization efficiency according to the present disclosure.
Fig. 2 is a photograph illustrating a raw material input section of a jet mill system with improved pulverization efficiency according to the present disclosure (Examples 1 to 6) and a raw material input section of a jet mill system according to the prior art (Comparative Examples 1 and 2).

### DETAILED DESCRIPTION

Hereinafter, a preferred embodiment of a jet mill capable of removing static electricity according to the present disclosure and a method of pulverizing sulfide-based solid electrolyte using the same will be described in detail with reference to the attached drawings. For reference, the terms and words used in the present specification and claims should not be interpreted as limited to their usual or dictionary meanings, and should be interpreted as meanings and concepts that conform to the technical idea of the present disclosure based on the principle that the inventor can appropriately define the concept of the term in order to explain his or her own invention in the best possible way. In addition, the embodiments described in the present specification and the configurations illustrated in the drawings are only the most preferred embodiments of the present disclosure and do not represent all of the technical ideas of the present disclosure, so it should be understood that there may be various equivalents and modified examples that can replace them at the time of filing this application.

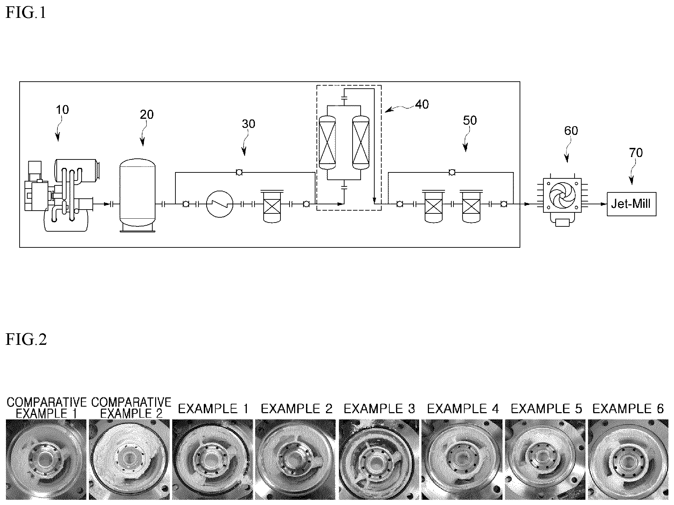

Fig. 1 is a view illustrating a schematic configuration of a jet mill system with improved pulverization efficiency according to the present disclosure.

The jet mill system with improved pulverization efficiency according to the present disclosure is configured to be sequentially arranged, including a compressor 10, a dehumidifier 20, filters 30 and 50, a cooler 60, and a jet mill 70.

The compressor 10 compresses gas that is introduced from the outside through a dust filter.

In this case, the gas is preferably any one of pure nitrogen, pure argon, and air.

The dehumidifier 20 removes moisture in the gas compressed by the compressor 10.

The dehumidifier 20 can dehumidify to a dew point of -90°C.

The filters 30 and 50 filter foreign substances in the gas from which moisture has been removed by the dehumidifier 20.

The cooler 60 cools the gas filtered by the filters 30 and 50 and supplies the cooled gas into the milling main body of the jet mill 70, and a plurality of coolers 60 may be provided and installed in series.

The reason for providing the plurality of coolers 60 and installing them in series is to efficiently cool the gas compressed by the compressor 10 to a desired temperature.

That is, since the temperature and capacity that can be cooled are different for each cooler (cooling facility), a plurality of coolers are connected in series so that cooling can be performed in stages in each cooler.

For example, two coolers may be provided so that the compressed gas can be cooled to 0°C in a first cooler and to a desired sub-zero temperature in a second cooler.

In this case, the temperature of the gas cooled by the cooler 60 and supplied into the milling main body (mill base) of the jet mill 70 is preferably controlled to -5°C to 10°C.

Meanwhile, between the dehumidifier 20 and the cooler 60, a pre-treatment filter 30 for filtering foreign substances in the compressed and dehumidified gas, a carbonation purifier 40 for purifying carbonic acid in the gas from which foreign substances have been filtered by the pre-treatment filter 30, and a post-treatment filter 50 for filtering residual foreign substances in the gas from which carbonic acid has been purified by the carbonation purifier 40 may be sequentially arranged.

In this way, the present disclosure adds the cooler 60 to cool the compressed gas having an increased temperature due to processes such as compression and dehumidification, thereby controlling the compressed gas to 10°C or lower (-5°C to 10°C). Accordingly, it is possible to facilitate particle size control of the sulfide-based solid electrolyte and prevent the sulfide-based solid electrolyte from sticking to the milling main body.

In addition, according to the present disclosure, it is possible to prevent carbonation from acting as an impurity and lowering the purity or from generating secondary or tertiary byproducts to impair the performance of the solid electrolyte by additionally installing a carbonation purifier 40 between the dehumidifier 20 and the cooler 60.

As can be seen in [Table 1] below, the applicant compared a production volume and PSA according to the temperature (mill base temperature) of the gas (in the present specification, the experiment is conducted with air among the gases) supplied to the mill base inside the milling main body of the jet mill.

The experimental process is as follows.

After installing the cooler, the cooling facility is stopped and the compressed air is supplied to the jet mill through the bypass section.

In this case, the temperature of the compressed air is based on the temperature inside the milling main body 20 minutes after the compressed air is supplied to the facility.

Data for Comparative Example 1 and Comparative Example 2 are collected when the compressed air temperature is 23°C.

The cooling facility is operated to check the temperature inside the milling main body, and only the temperature is changed to -5°C, 0°C, and 10°C, and the same experiment as Comparative Example 1 and Comparative Example 2 is performed. (This experiment is Example 1 to Example 6.)

After conducting the experiment, the production volume and the degree of accumulation in the milling main body raw material inlet are checked and converted into data.

**[Table 1] Production volume and PSA (Examples 1 to 6) by jet mill system with improved pulverization efficiency according to present disclosure and production volume and PSA (Comparative Example 1 and Comparative Example 2) by jet mill system according to conventional technology; comparison according to the temperature difference of mill-base**

| Category | | Comparative Example 1 | Comparative Example 1 | Example 1 | Example 2 | Example 3 | Example 4 | Example 5 | Example 6 |
|---|---|---|---|---|---|---|---|---|---|
| Jet mill | | A | B | A | A | A | B | B | B |
| Nozzle | | 6 bar | 6 bar | 6 bar | 6 bar | 6 bar | 6 bar | 6 bar | 6 bar |
| Pulverization conditions | | 6 bar, 6500rpm | 6 bar, 6500rpm | 6 bar, 6500 rpm | 6 bar, 6500 rpm | 6 bar, 6500 rpm | 6 bar, 6500 rpm | 6 bar, 6500 rpm | 6 bar, 6500 rpm |
| Mill-base temperature | | 23°C | 23°C | 10°C | 0°C | -5°C | 10°C | 0°C | -5°C |
| Material | Classifier | SUS | Ceramic | SUS | SUS | SUS | Ceramic | Ceramic | Ceramic |
| | Mill base | SUS | Ceramic | SUS | SUS | SUS | Ceramic | Ceramic | Ceramic |
| Production volume (g/h) | | 547 | 407 | 612 | 694 | 752 | 472 | 533 | 617 |
| PSA | D50 | 2.99 | 2.91 | 2.89 | 2.67 | 2.48 | 2.92 | 2.84 | 2.73 |
| | Dₘₐₓ | 13.08 | 13.08 | 11.00 | 13.08 | 11.00 | 11.00 | 13.08 | 9.25 |

It is preferable that the classifier installed on the upper portion of the milling main body of the jet mill and separating particles by particle size and the mill base at the lower portion of the milling main body are made of SUS (Steel Use Stainless) series or ceramic.

Here, PSA stands for Particle Size Analysis, which is an analysis method that measures the size of particles and calculates the relative ratio of particles.

In other words, PSA is an analysis method that measures the distribution of particles by measuring the minimum, maximum, and average values.

In this case, the concept of cumulative distribution is used, the size values corresponding to 10%, 50%, and 90% of the largest value are called D10, D50, and D90, respectively, the average value is called Dₘₑₐₙ, and the maximum value is called Dₘₐₓ.

Meanwhile, as can be seen in [Table 1] above, the production volume and PSA of Example 3 were the best.

That is, as the temperature of the mill base (Mill-Base) decreases, the production volume tends to increase, and it can be seen that the pulverization is smoothly performed, so the particle size becomes smaller.

Fig. 2 is a photograph illustrating a raw material input section of a jet mill system with improved pulverization efficiency according to the present disclosure (Examples 1 to 6) and a raw material input section of a jet mill system according to the prior art (Comparative Examples 1 and 2).

After conducting the experiment according to the experimental conditions described in [Table 1] above, the state in which the raw material was fixed to the raw material input section of the milling main body of the jet mill was confirmed as shown in Fig. 2.

In the case of Comparative Examples 1 and 2 where the temperature of the mill base was 23°C, the raw material was fixed to the raw material input section of the milling main body and clumped together.

As can be seen in the cases of Examples 1 to 6, as the temperature of the mill base was lowered, the phenomenon of the raw material being fixed to the raw material input section of the milling main body was significantly reduced.

**[Table 2] Comparison of production volume, electrical conductivity, and ionic conductivity according to ON-OFF operation of carbonation purifier**

| Category | | Comparative Example 1 | Example 1 (experiment after carbonation purifier is turned off) | Example 1 (reproducibility experiment) |
|---|---|---|---|---|
| Jet mill | | A | A | A |
| Nozzle | | 6 bar | 6 bar | 6 bar |
| Pulverization conditions | | 6 bar, 6500rpm | 6 bar, 6500rpm | 6 bar, 6500 rpm |
| Carbonation purifier | | ON | OFF | OFF |
| Mill-Base temperature | | 23°C | 23°C | 22°C |
| Material | Classifier | SUS | SUS | SUS |
| | Mill base | SUS | SUS | SUS |
| Production volume (g/h) | | 547 | 571 | 531 |
| Electrical conductivity (S/cm) | | 3.96 x 10⁻¹⁰ | 1.02 x 10⁻⁹ | 2.46 x 10⁻⁹ |
| Ion conductivity (S/cm) | After 0 hrs | 3.40 x 10⁻³ | 2.21 x 10⁻³ | 1.24 x 10⁻³ |
| | After 4 hrs | 2.19 x 10⁻³ | 9.41 x 10⁻⁴ | 5.87 x 10⁻⁴ |
| | Maintenance rate | 64.4% | 42.6% | 47.3% |

In the case of evaluating the ionic conductivity maintenance rate, samples were collected under the same conditions for Comparative Example 1 and Example 1 by double vacuum packaging using an aluminum pouch.

In addition, since initial moisture contact was required for evaluating an ionic conductivity maintenance rate, the 0-hour ionic conductivity was measured under the dew point condition of -20°C and then immediately sealed.

In addition, sampling for electrical conductivity measurement was performed under dew point conditions of -60°C.

As a result, when pulverizing without turning on the carbonation purifier, there was no significant difference in the production volume between Comparative Example 1 and Example 1, but the ionic conductivity of Example 1 decreased compared to Comparative Example 1, and the electrical conductivity of Example 1 increased compared to Comparative Example 1.

Hereinafter, a method for verifying the change in ionic conductivity and electrical conductivity according to the presence or absence of carbonic acid is briefly described.

### [Verification Method 1] Comparison of deterioration rate of ionic conductivity according to presence or absence of carbonic acid

The hydrolysis reaction of argyrodite is as follows.

Li₆PS₅Cl + 6H₂O → LiCl + Li₃PO₄ + 5H₂S + 2LiOH

When carbonic acid (CO₂) is added here, the neutralization reaction equation is as follows.

2LiOH + CO₂ → Li₂CO₃ + H₂O

When carbonic acid is present and exposed to moisture, additional H₂O is generated by the additional neutralization reaction, and the ionic conductivity decreases due to deterioration.

### [Verification Method 2] Changes in electrical conductivity depending on the presence or absence of carbonic acid

The higher the electrical conductivity of the electrolyte, the higher the possibility of self-discharge during the cell process, so the lower the electrical conductivity, the better the physical properties.

Since the electrical conductivity increases when carbon is included, the presence or absence of carbonic acid can be indirectly confirmed through sample analysis under the same conditions.

The present disclosure described above is not limited to the aforementioned examples and the attached drawings, and it will be apparent to those skilled in the art that various substitutions, modifications, and changes are possible within the scope that does not depart from the technical idea of the present disclosure.

### [Detailed Description of Main Elements]

10: compressor
20: dehumidifier
30: pre-treatment filter
40: carbonation purifier
50: post-treatment filter
60: cooler
70: jet mill

## Claims

1. A jet mill system with improved pulverization efficiency comprising:
a compressor (10) configured to compress gas introduced from the outside;
a dehumidifier (20) configured to remove moisture in the compressed gas from the compressor;
a filter (30, 50) configured to filter foreign substances in the gas from which moisture has been removed from the dehumidifier; and
a cooler (60) configured to cool the gas filtered by the filter and supply the cooled gas into a milling main body of the jet mill (70).

2. The jet mill system with improved pulverization efficiency of claim 1, wherein the gas is any one of pure nitrogen, pure argon, and air.

3. The jet mill system with improved pulverization efficiency of claim 1, wherein the dehumidifier dehumidifies to a dew point of -90°C,

4. The jet mill system with improved pulverization efficiency of claim 1, further comprising:
a pre-treatment filter (30) configured to filter the foreign substances in the compressed and dehumidified gas;
a carbonation purifier (40) configured to purify carbonic acid in the gas from which foreign substances are filtered by the pre-treatment filter; and
a post-treatment filter (50) configured to filter residual foreign substances in the gas from which carbonic acid is purified by the carbonation purifier,
wherein the pre-treatment filter, the carbonation purifier, and the post-treatment filter are sequentially arranged between the dehumidifier and the cooler.

5. The jet mill system with improved pulverization efficiency of claim 4, wherein a temperature of the gas cooled by the cooler and supplied into the milling main body of the jet mill is controlled to -5°C to 10°C.

6. The jet mill system with improved pulverization efficiency of claim 5, wherein a plurality of coolers are provided and installed in series.

7. The jet mill system with improved pulverization efficiency of claim 1, wherein materials of a classifier installed on an upper portion of the milling main body of the jet mill to separate particles by size and a mill base in a lower portion of the milling main body are Steel Use Stainless (SUS) series or ceramic.

## Patentansprüche

1. Ein Strahlmühlensystem mit verbesserter Pulverisierungseffizienz, das Folgendes beinhaltet:
einen Verdichter (10), der dazu konfiguriert ist, von außen eingeführtes Gas zu verdichten;
einen Entfeuchter (20), der dazu konfiguriert ist, Feuchtigkeit in dem verdichteten Gas aus dem Verdichter zu entfernen;
einen Filter (30, 50), der dazu konfiguriert ist, Fremdstoffe in dem Gas zu filtern, aus dem Feuchtigkeit mittels des Entfeuchters entfernt wurde; und
einen Kühler (60), der dazu konfiguriert ist, das durch den Filter gefilterte Gas zu kühlen und das gekühlte Gas einem Mahlhauptkörper der Strahlmühle (70) zuzuführen.

2. Strahlmühlensystem mit verbesserter Pulverisierungseffizienz gemäß Anspruch 1, wobei das Gas eines von reinem Stickstoff, reinem Argon und Luft ist.

3. Strahlmühlensystem mit verbesserter Pulverisierungseffizienz gemäß Anspruch 1, wobei der Entfeuchter auf einen Taupunkt von -90 °C entfeuchtet.

4. Strahlmühlensystem mit verbesserter Pulverisierungseffizienz gemäß Anspruch 1, das ferner Folgendes beinhaltet:
einen Vorbehandlungsfilter (30), der dazu konfiguriert ist, die Fremdstoffe in dem verdichteten und entfeuchteten Gas zu filtern;
einen Karbonisierungsreiniger (40), der dazu konfiguriert ist, Kohlensäure in dem Gas zu reinigen, aus dem Fremdstoffe durch den Vorbehandlungsfilter gefiltert werden; und
einen Nachbehandlungsfilter (50), der dazu konfiguriert ist, restliche Fremdstoffe in dem Gas zu filtern, aus dem Kohlensäure durch den Karbonisierungsreiniger gereinigt wird, wobei der Vorbehandlungsfilter, der Karbonisierungsreiniger und der Nachbehandlungsfilter nacheinander zwischen dem Entfeuchter und dem Kühler angeordnet sind.

5. Strahlmühlensystem mit verbesserter Pulverisierungseffizienz gemäß Anspruch 4, wobei eine Temperatur des durch den Kühler gekühlten und dem Mahlhauptkörper der Strahlmühle zugeführten Gases auf -5 °C bis 10 °C gesteuert wird.

6. Strahlmühlensystem mit verbesserter Pulverisierungseffizienz gemäß Anspruch 5, wobei eine Vielzahl von Kühlern bereitgestellt und in Reihe installiert ist.

7. Strahlmühlensystem mit verbesserter Pulverisierungseffizienz gemäß Anspruch 1, wobei Materialien eines Sichters, der an einem oberen Abschnitt des Mahlhauptkörpers der Strahlmühle installiert ist, um Partikel nach Größe zu trennen, und einer Mahlbasis in einem unteren Abschnitt des Mahlhauptkörpers SUS-Serie (SUS, *Steel Use Stainless)* oder Keramik sind.

## Revendications

1. Un système de broyeur à jet à efficacité de pulvérisation améliorée comprenant :
un compresseur (10) configuré pour comprimer un gaz introduit depuis l'extérieur ;
un déshumidificateur (20) configuré pour éliminer l'humidité dans le gaz comprimé provenant du compresseur ;
un filtre (30, 50) configuré pour filtrer des substances étrangères dans le gaz dont l'humidité a été éliminée à partir du déshumidificateur ; et
un refroidisseur (60) configuré pour refroidir le gaz filtré par le filtre et amener le gaz refroidi jusque dans un corps principal de broyage du broyeur à jet (70).

2. Le système de broyeur à jet à efficacité de pulvérisation améliorée de la revendication 1, dans lequel le gaz est l'un quelconque parmi l'azote pur, l'argon pur et l'air.

3. Le système de broyeur à jet à efficacité de pulvérisation améliorée de la revendication 1, dans lequel le déshumidificateur déshumidifie jusqu'à un point de rosée de -90 °C.

4. Le système de broyeur à jet à efficacité de pulvérisation améliorée de la revendication 1, comprenant en outre :
un filtre de prétraitement (30) configuré pour filtrer les substances étrangères dans le gaz comprimé et déshumidifié ;
un purificateur de carbonatation (40) configuré pour purifier l'acide carbonique dans le gaz dont des substances étrangères sont filtrées par le filtre de prétraitement ; et
un filtre de post-traitement (50) configuré pour filtrer des substances étrangères résiduelles dans le gaz duquel de l'acide carbonique est purifié par le purificateur de carbonatation,
dans lequel le filtre de prétraitement, le purificateur de carbonatation, et le filtre de post-traitement sont disposés en séquence entre le déshumidificateur et le refroidisseur.

5. Le système de broyeur à jet à efficacité de pulvérisation améliorée de la revendication 4, dans lequel une température du gaz refroidi par le refroidisseur et amené jusque dans le corps principal de broyage du broyeur à jet est régulée entre -5 °C et 10 °C.

6. Le système de broyeur à jet à efficacité de pulvérisation améliorée de la revendication 5, dans lequel une pluralité de refroidisseurs sont prévus et installés en série.

7. Le système de broyeur à jet à efficacité de pulvérisation améliorée de la revendication 1, dans lequel des matériaux dont sont constitués un classificateur installé sur une portion supérieure du corps principal de broyage du broyeur à jet afin de séparer des particules par taille et une base de broyeur dans une portion inférieure du corps principal de broyage sont des matériaux de la série Steel Use Stainless (SUS) ou de la céramique.
